(19) Europäisches Patentamt / European Patent Office / Office européen des brevets

(11) **EP 2 729 413 B1**

(12) **FASCICULE DE BREVET EUROPEEN**

(45) Date de publication et mention de la délivrance du brevet:
**10.10.2018 Bulletin 2018/41**

(21) Numéro de dépôt: **12738575.5**

(22) Date de dépôt: **06.07.2012**

(51) Int Cl.:
***C01B 33/24*** *(2006.01)*     ***C01B 33/20*** *(2006.01)*
***C01B 33/22*** *(2006.01)*     ***C01B 33/38*** *(2006.01)*

(86) Numéro de dépôt international:
**PCT/FR2012/051594**

(87) Numéro de publication internationale:
**WO 2013/004979 (10.01.2013 Gazette 2013/02)**

(54) **PROCÉDÉ DE PRÉPARATION D'UNE COMPOSITION COMPRENANT DES PARTICULES MINÉRALES SYNTHÉTIQUES ET COMPOSITION PRÉPARÉE**

VERFAHREN ZUR HERSTELLUNG EINER ZUSAMMENSETZUNG MIT SYNTHETISCHEN MINERALPARTIKELN UND ZUSAMMENSETZUNG DARAUS HERGESTELLT

PROCESS FOR PREPARING A COMPOSITION COMPRISING SYNTHETIC MINERAL PARTICLES AND PREPARED COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.07.2011 FR 1102144**

(43) Date de publication de la demande:
**14.05.2014 Bulletin 2014/20**

(73) Titulaires:
• **Centre National de la Recherche Scientifique (C.N.R.S.)**
**75794 Paris Cedex 16 (FR)**
• **Université Paul Sabatier (Toulouse III)**
**31062 Toulouse Cedex 9 (FR)**

(72) Inventeurs:
• **LE ROUX, Christophe**
**F-31290 Avignonet Lauragais (FR)**
• **MARTIN, François**
**F-31570 Ste Foy D'aigrefeuile (FR)**
• **MICOUD, Pierre**
**31390 PEYSSIES (FR)**
• **DUMAS, Angela**
**F-31320 Pechabou (FR)**

(74) Mandataire: **Lavoix**
**2, place d'Estienne d'Orves**
**75441 Paris Cedex 09 (FR)**

(56) Documents cités:
**WO-A2-2008/009799     WO-A2-2008/009800**
**FR-A1- 2 802 913     US-A1- 2009 233 107**

Remarques:
Le dossier contient des informations techniques présentées postérieurement au dépôt de la demande et ne figurant pas dans le présent fascicule.

**EP 2 729 413 B1**

**Description**

L'invention concerne un procédé de préparation d'une composition comprenant des particules minérales synthétiques ainsi qu'une composition comprenant des particules minérales synthétiques.

Dans tout le texte, on désigne par « particule minérale » toute particule inorganique, qui ne contient de carbone, le cas échéant, que sous forme de carbonate ou de cyanure.

Dans tout le texte, on désigne par « traitement hydrothermal » tout traitement réalisé dans un récipient fermé, tel qu'un autoclave, en présence d'eau, à une température prédéterminée et à une pression supérieure à la pression atmosphérique.

De nombreux minéraux tels que les borates ou les silicates sont utilisés dans divers domaines industriels. Les particules minérales phyllosilicatées, telles que le talc, sont par exemple utilisées sous forme de fines particules dans de nombreux secteurs industriels, tels que : les thermoplastiques, les élastomères, le papier, la peinture, les vernis, le textile, la métallurgie, la pharmaceutique, la cosmétique, les produits phytosanitaires ou encore les engrais dans lesquels des phyllosilicates tel que le talc sont utilisés, par incorporation dans une composition, à titre de charge inerte (pour leur stabilité chimique ou encore pour la dilution de composés actifs de coût supérieur) ou de charges fonctionnelles (par exemple pour renforcer les propriétés mécaniques de certains matériaux).

Le talc naturel, qui est un silicate de magnésium hydraté de formule $Si_4Mg_3O_{10}(OH)_2$, appartient à la famille des phyllosilicates. Les phyllosilicates sont constitués par un empilement irrégulier de feuillets élémentaires de structure cristalline, dont le nombre varie de quelques unités à quelques dizaines d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2/1, dont font notamment partie les smectites. Au vu de leur structure, les phyllosilicates 2/1 sont également qualifiées de type T.O.T. (tétraèdre-octaèdre-tétraèdre).

La couche octaédrique des phyllosilicates 2/1 est formée de deux plans d'ions $O^{2-}$ et $OH^-$ (dans la proportion molaire $O^{2-}/OH^-$ de 2:1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires.

En ce qui concerne le talc, pour nombre de ces applications, une pureté élevée, une finesse des particules et de bonnes propriétés cristallines sont recherchées car elles sont déterminantes pour la qualité du produit final.

Or, la préparation d'une composition pulvérulente à partir de blocs de talc naturel, par broyage et traitement du talc ne permet pas de contrôler la pureté, la lamellarité, et la taille des particules de talc obtenues. En outre, le broyage du talc naturel entraîne irrémédiablement une amorphisation de celui-ci, ou à tout le moins une diminution importante de sa cristallinité.

Dans ce contexte, WO 2008/009799 propose un procédé de préparation d'une composition talqueuse comprenant au moins un minéral synthétique silico/germano-métallique de formule $(Si_xGe_{1-x})_4M_3O_{10}(OH)_2$ par traitement hydrothermal d'un hydrogel silico/germano-métallique de formule $(Si_xGe_{1-x})_4M_3O_{11}$, n'$H_2O$, à l'état liquide à une température comprise entre 300°C et 600°C. Une telle composition talqueuse selon WO 2008/009799 comprend des particules silico/germano-métalliques de formule $(Si_xGe_{1-x})_4M_3O_{10}(OH)_2$ présentant des similarités structurelles avec le talc naturel et présentant, en diffraction des rayons X, certaines raies de diffraction caractéristiques du talc c'est-à-dire des raies correspondant aux plans (001), (020), (003) et (060).

Ainsi, un procédé selon WO 2008/009799, bien que permettant la préparation d'un minéral synthétique proche du talc et dont la pureté peut être contrôlée, reste difficilement compatible avec des exigences industrielles élevées, en termes d'efficacité, de rentabilité et de qualités structurales des particules minérales synthétiques obtenues.

L'invention vise à proposer un procédé amélioré de préparation d'une composition comprenant des particules minérales synthétiques silicatées.

L'invention vise à proposer un procédé amélioré de préparation d'une composition comprenant des particules minérales synthétiques phyllosilicatées présentant au moins une phase non gonflante.

L'invention vise à proposer un procédé de préparation d'une composition comprenant des particules minérales synthétiques, en particulier des particules minérales synthétiques phyllosilicatées, présentant des propriétés structurales améliorées.

L'invention vise à proposer un procédé de préparation d'une composition comprenant des particules minérales synthétiques dont la durée est considérablement réduite par rapport à la durée de préparation nécessaire dans un procédé de préparation d'une telle composition décrit dans l'état de la technique.

L'invention vise également à proposer un procédé de préparation d'une composition talqueuse dans lequel on effectue un traitement hydrothermal d'un hydrogel silico/germano-métallique à une température réduite et/ou pendant une durée réduite et permettant d'obtenir une composition talqueuse comprenant des particules phyllosilicatées présentant des propriétés améliorées.

L'invention vise à proposer un tel procédé dont la mise en oeuvre est simple et rapide, et est compatible avec

2

les contraintes d'une exploitation industrielle.

L'invention vise à proposer un procédé de préparation de compositions comprenant des particules minérales synthétiques phyllosilicatées de grande pureté, comprenant des particules minérales synthétiques ayant une lamellarité et une granulométrie fine et de faible dispersion, et une structure cristalline améliorée et thermiquement stable.

L'invention vise également à proposer des compositions comprenant des particules minérales synthétiques présentant des propriétés, notamment structurales, améliorées.

L'invention vise également à proposer des compositions comprenant des particules minérales synthétiques phyllosilicatées pouvant être utilisées en remplacement de compositions de talc naturel, dans diverses de leurs applications.

Pour ce faire, l'invention concerne un procédé de préparation d'une composition selon la revendication 1.

En effet, les inventeurs ont constaté avec surprise qu'un procédé selon l'invention, dans lequel on prépare un hydrogel précurseur de particules minérales synthétiques en présence d'au moins un sel carboxylate de formule $R_2$-COOM' tel que défini précédemment, permet d'obtenir des particules minérales synthétiques présentant des propriétés améliorées. Aucune explication claire ne peut être donnée au résultat très surprenant obtenu par l'invention, qui permet notamment, par simple adjonction d'un sel carboxylate de formule $R_2$-COOM' dans le milieu de préparation de l'hydrogel précurseur, de préparer une composition comprenant des particules minérales synthétiques présentant des propriétés améliorées, notamment en termes de cristallinité. En particulier, un procédé selon l'invention permet ainsi de préparer une composition comprenant des particules minérales synthétiques présentant des propriétés structurales très proches d'un talc naturel, et notamment plus proches d'un talc naturel qu'une composition talqueuse de l'état de la technique.

Selon l'invention, ledit composé comprenant au moins un élément métallique M est un sel dicarboxylate de formule $M(R_1\text{-COO})_2$ dans laquelle :

- $R_1$ est choisi parmi H et les groupements alkyles comprenant moins de 5 atomes de carbone et,
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque $y(i)$ représentant un nombre réel de l'intervalle [0;1], et tel que $\sum y(i) = 1$.

Avantageusement et selon l'invention, ledit hydrogel est soumis à tout traitement adapté pour permettre d'obtenir lesdites particules minérales synthétiques, par exemple un traitement hydrothermal.

Avantageusement et selon l'invention, on soumet ensuite ledit hydrogel à un traitement hydrothermal à une température comprise entre 150°C et 400°C, pour obtenir lesdites particules minérales synthétiques.

En particulier, la température à laquelle est réalisé le traitement hydrothermal de l'hydrogel est comprise entre 150°C et 370°C, et notamment entre 200°C et 350°C.

Par ailleurs, la durée du traitement hydrothermal est adaptée pour permettre l'obtention desdites particules minérales synthétiques, en fonction notamment de la température à laquelle est réalisé le traitement hydrothermal. Avantageusement et selon l'invention, on soumet ledit hydrogel à un traitement hydrothermal pendant une durée comprise entre 30 minutes et 30 jours, en particulier entre 1 heure et 15 jours et par exemple entre 2 heures et 24 heures.

En particulier, avantageusement et selon l'invention, on soumet directement le milieu de co-précipitation dudit hydrogel précurseur à un traitement hydrothermal. En effet, il est possible de garder le milieu de co-précipitation dudit hydrogel précurseur, comprenant ledit sel carboxylate de formule $R_2$-COOM', pour procéder au traitement hydrothermal, la présence dudit sel carboxylate permettant en outre d'accélérer ledit traitement hydrothermal.

Ainsi, un procédé selon l'invention permet de préparer une composition comprenant des particules minérales synthétiques de façon simplifiée en préparant un hydrogel précurseur de particules minérales synthétiques en présence d'au moins un sel carboxylate de formule $R_2$-COOM' et en réalisant, à la suite, c'est-à-dire sans modification du milieu de co-précipitation dudit hydrogel, la transformation dudit hydrogel précurseur en une composition comprenant des particules minérales synthétiques par un traitement hydrothermal.

Les groupements $R_1$ et $R_2$ peuvent être identiques ou différents. Avantageusement et selon l'invention, les groupements $R_1$ et $R_2$ sont choisis dans le groupe formé de $CH_3$-, $CH_3$-$CH_2$- et $CH_3$-$CH_2$-$CH_2$-. En particulier, avantageusement et selon l'invention, les groupements $R_1$ et $R_2$ sont identiques.

Selon l'invention, ledit composé comprenant du silicium est choisi dans le groupe constitué des silicates de sodium et des silices (dioxydes de silicium). Avantageusement et selon l'invention, on utilise du métasilicate de sodium à titre de composé comprenant du silicium.

Avantageusement et selon l'invention, ledit hydrogel précurseur desdites particules minérales synthétiques est un hydrogel silico/germano-métallique, de formule $(Si_xGe_{1-x})_4M_3O_{11}$, n'$H_2O$:

- x étant un nombre réel de l'intervalle [0;1],

- n' étant relatif à un nombre de molécule(s) d'eau associée(s) audit hydrogel silico/germano-métallique.

Dans un mode de réalisation particulièrement avantageux d'un procédé selon l'invention, ledit hydrogel silico/germano-métallique a pour formule $Si_4M_3O_{11}$, $n'H_2O$. Dans ce cas, ledit hydrogel silico/germano-métallique de formule $Si_4M_3O_{11}$, $n'H_2O$ est un hydrogel silico-métallique.

Avantageusement et selon l'invention, lesdites particules minérales synthétiques sont des particules minérales silicatées, c'est-à-dire des particules appartenant à la famille des silicates dont la structure comprend des groupements $[SiO_4]$ tétraédriques. En particulier, avantageusement et selon l'invention, lesdites particules minérales synthétiques sont des particules minérales phyllosilicatées, c'est-à-dire des particules appartenant à la famille des silicates lamellaires, dont font par exemple partie les micas et le talc.

Avantageusement et selon l'invention, lesdites particules minérales phyllosilicatées présentent au moins une phase non gonflante formée d'un empilement de feuillets élémentaires de type phyllosilicate 2/1 et de formule chimique $(Si_xGe_{1-x})_4M_3O_{10}(OH)_2$. En particulier, dans un mode de réalisation particulièrement avantageux d'un procédé selon l'invention, ladite phase non gonflante peut être formée d'un empilement de feuillets élémentaires de type phyllosilicate 2/1 et de formule chimique $Si_4M_3O_{10}(OH)_2$, et plus particulièrement de formule chimique $Si_4Mg_3O_{10}(OH)_2$ (M désignant alors le magnésium).

En particulier, après un traitement hydrothermal d'un hydrogel précurseur silico/germano-métallique de formule $(Si_xGe_{1-x})_4M_3O_{11}$, $n'H_2O$, préparé par un procédé selon l'invention, on obtient une composition comprenant des particules minérales synthétiques phyllosilicatées présentant, en diffraction des rayons X, au moins une raie de diffraction caractéristique d'un plan (001) situé à une distance comprise entre 9,40 Å et 9,90Å. La présence d'une telle raie de diffraction est caractéristique d'un produit très proche d'un talc naturel. En outre, une telle composition ne présente pas, en diffraction des rayons X, de raie de diffraction caractéristique d'un plan situé à une distance comprise entre 12,00 Å et 18,00 Å, révélant habituellement la présence résiduelle d'une phase gonflante présentant des espaces interfoliaires dans lesquels se trouvent des cations interfoliaires et d'éventuelles molécules d'eau. Une telle phase gonflante est différente d'un produit talqueux de formule $(Si_xGe_{1-x})_4M_3O_{10}(OH)_2$.

En outre, une composition comprenant des particules minérales synthétiques phyllosilicatées obtenue par un procédé selon l'invention présente, en diffraction des rayons X, au moins une raie de diffraction caractéristique d'un plan (002) situé à une distance comprise entre 4,60 Å et 4,80 Å.

Avantageusement et selon l'invention, le(s) sel(s) carboxylate(s) de formule $R_2$-COOM' est(sont) présent(s) de façon à présenter, par rapport au silicium, un rapport molaire $R_2$-COOM'/Si compris entre 0,1 et 9.

Selon l'invention, la concentration en sel(s) carboxylate(s) dans le milieu de préparation de l'hydrogel précurseur, peut être adaptée pour permettre l'obtention d'une composition comprenant des particules minérales synthétiques, après une durée de traitement hydrothermal réduite. Avantageusement et selon l'invention, le(s) sel(s) carboxylate(s) de formule $R_2$-COOM' est(sont) présent(s) de façon à présenter une concentration en sel(s) carboxylate(s) de formule $R_2$-COOM' comprise entre 0,2 mol/L et 5 mol/L.

Avantageusement et selon l'invention, on effectue le traitement hydrothermal dudit hydrogel, et en particulier dudit gel silico/germano-métallique, au moyen d'un autoclave. Il peut par exemple s'agir d'un autoclave formé d'un alliage à base de nickel tel que l'Hastelloy® (commercialisé par Haynes International, Kokomo, Etats-Unis) ou encore d'un autoclave en titane ou éventuellement en acier à chemisage intérieur en polytétrafluoroéthylène (PTFE) dans un cas où la température de traitement hydrothermal ne dépasse pas 250°C. Un tel autoclave peut présenter toute contenance, par exemple une contenance allant de 200 mL à 50 L.

Avantageusement et selon l'invention, on réalise ledit traitement hydrothermal sous agitation mécanique. A cet effet, on peut par exemple utiliser un autoclave muni d'une hélice métallique interne.

Avantageusement et selon l'invention, on réalise ledit traitement hydrothermal à une pression comprise entre 0,5 MPa (5 bars) et 20 MPa (200 bars). Avantageusement et selon l'invention, on réalise ledit traitement hydrothermal sous pression autogène, c'est-à-dire à une pression au moins égale à la pression de vapeur saturante de l'eau (pression à laquelle la phase vapeur est en équilibre avec la phase liquide). La pression autogène atteinte dans l'autoclave au cours du traitement hydrothermal dépend donc notamment de la température à laquelle on réalise ledit traitement hydrothermal, du volume de l'autoclave et de la quantité d'eau présente. Il est également possible de réaliser le traitement hydrothermal à une pression supérieure à la pression de vapeur saturante de l'eau ou à la pression autogène, dans le récipient dans lequel a lieu le traitement hydrothermal. Pour ce faire, on injecte un gaz chimiquement neutre vis-à-vis de la réaction hydrothermale dans l'autoclave ou le récipient dans lequel a lieu le traitement hydrothermal. Un tel gaz est choisi dans le groupe formé des gaz inertes (gaz rares), en particulier l'argon, du diazote ($N_2$), du dioxyde de carbone et de l'air (air comprimé).

Avantageusement et selon l'invention, on rajoute dans l'autoclave, avec ledit hydrogel, et en particulier avec ledit hydrogel silico/germano-métallique, une quantité d'eau (de préférence de l'eau distillée) au moins suffisante pour créer, à l'intérieur de cet autoclave porté à la température de traitement, une atmosphère de vapeur saturante.

Avantageusement et selon l'invention, on réalise le traitement hydrothermal avec un hydrogel, en particulier un hydrogel silico/germano-métallique, liquéfié ayant un rapport liquide/solide compris entre 2 et 20, notamment entre 5 et 15 (la quantité de liquide étant exprimée en cm$^3$, et la quantité de solide, en grammes, et désignant la quantité d'hydrogel sec uniquement, c'est-à-dire sans prendre en compte le(s) sel(s) carboxylate(s)). Eventuellement, si nécessaire, on rajoute audit hydrogel silico/germano-métallique liquéfié une quantité d'eau appropriée pour atteindre ce rapport.

Avantageusement et selon l'invention, au terme d'un traitement hydrothermal d'un hydrogel silico/germano-métallique conforme à l'invention, on obtient une composition se présentant sous la forme d'une solution colloïdale renfermant des particules minérales phyllosilicatées présentant au moins une phase non gonflante. Ces particules minérales synthétiques en solution se trouvent dans un état tel que les particules sont bien individualisées les unes par rapport aux autres, avec très peu ou pas d'agrégat(s) de particules minérales synthétiques.

Avantageusement et selon l'invention, à l'issue du traitement hydrothermal, on récupère une composition colloïdale comprenant des particules minérales synthétiques en suspension dans une solution aqueuse de sel(s) carboxylate(s). Ladite composition colloïdale peut ensuite être soumise à une étape de séchage, après une éventuelle étape de lavage à l'eau de façon à éliminer au moins en partie le(s)dit(s) sel(s) carboxylate(s). Une telle étape de lavage comprend au moins un cycle de lavage/centrifugation de ladite composition colloïdale.

Ladite composition comprenant des particules minérales synthétiques obtenue par un procédé selon l'invention peut être séchée par toute technique de séchage de poudre. Avantageusement et selon l'invention, consécutivement audit traitement hydrothermal, on sèche lesdites particules minérales synthétiques obtenues par lyophilisation. Le séchage peut également être réalisé au moyen d'une étuve, par exemple à une température comprise entre 60°C et 130°C, pendant 1 heure à 48 heures, sous irradiation de micro-ondes, ou encore par atomisation.

En outre, il est possible de soumettre la composition comprenant des particules minérales synthétiques obtenue après traitement hydrothermal à un traitement thermique anhydre, dans l'air, à une température supérieure à 350°C et inférieure à la température de dégradation des particules minérales synthétiques. Avantageusement et selon l'invention, on soumet une composition comprenant des particules minérales synthétiques obtenue après traitement hydrothermal à un traitement thermique anhydre, à une température comprise entre 350°C et 850°C, en particulier entre 400°C et 750°C et en particulier entre 450°C et 600°C, par exemple pendant une durée comprise entre 30 minutes et 24 heures. Avantageusement et selon l'invention, après ledit traitement hydrothermal, on soumet ladite composition comprenant des particules minérales synthétiques à un traitement thermique anhydre. Un tel traitement thermique ou « recuit » permet une augmentation supplémentaire de la cristallinité des particules obtenues.

L'invention concerne également une composition comprenant des particules minérales synthétiques silicatées, caractérisée en ce qu'elle présente, en diffraction des rayons X, des raies de diffraction caractéristiques suivantes :

- un plan (001) situé à une distance comprise entre 9,40 Å et 9,90 Å ;
- un plan (002) situé à une distance comprise entre 4,60 Å et 4,80 Å ;
- un plan (003) situé à une distance comprise entre 3,10 Å et 3,20 Å ;
- un plan (060) situé à une distance comprise entre 1,51 Å et 1,53 Å,

l'intensité de la raie de diffraction caractéristique d'un plan (002) étant supérieure à l'intensité du signal correspondant à un plan (020) situé à une distance comprise entre 4,40 Å et 4,60 Å, et, le rapport entre l'intensité de la raie de diffraction caractéristique d'un plan (001) et l'intensité de la raie de diffraction caractéristique d'un plan (003) étant compris entre 0,60 et 1,50.

Une telle composition est préparée par un procédé selon l'invention. En effet, en particulier dans le cas d'un traitement hydrothermal d'une durée importante et/ou effectué à une température suffisamment importante, et/ou, consécutivement à un traitement thermique anhydre, il est possible qu'une telle composition présente, en diffraction des rayons X, une raie de diffraction caractéristique d'un plan (002) située à une distance comprise entre 4,60 Å et 4,80 Å, d'une intensité tellement supérieure à celle de la raie de diffraction représentative d'un plan (020) situé à une distance comprise entre 4,40 Å et 4,60 Å, que la raie de diffraction représentative du plan (020) peut être masquée par la raie de diffraction caractéristique du plan (002).

Avantageusement et selon l'invention, lesdites particules minérales synthétiques sont des particules minérales phyllosilicatées présentant au moins une phase non gonflante formée d'un empilement de feuillets élémentaires de type phyllosilicate 2/1 et de formule chimique $(Si_xGe_{1-x})_4M_3O_{10}(OH)_2$, dans laquelle :

- x est un nombre réel de l'intervalle [0 ;1], et
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque

$y(i)$ représentant un nombre réel de l'intervalle [0;1], et tel que $\sum_{i=1}^{8} y(i) = 1$.

En particulier, ladite composition ne présente pas, en diffraction des rayons X, de raie de diffraction caractéristique d'un plan situé à une distance comprise entre 12,00 Å et 18,00 Å, révélant habituellement la présence résiduelle plus ou moins importante d'une phase gonflante.

Par ailleurs, un spectre en proche infrarouge d'une composition selon l'invention présente des raies caractéristiques des bandes de vibration d'un talc naturel. Avantageusement et selon l'invention, une composition selon l'invention présente, en proche infrarouge, une bande de vibration à 7185 $cm^{-1}$ représentative de la vibration de la liaison $Mg_3$-OH du talc.

En outre, le spectre en proche infrarouge d'une composition comprenant des particules minérales synthétiques selon l'invention présente une bande de vibration, située entre 5000 $cm^{-1}$ et 5500 $cm^{-1}$, caractéristique d'une composition de talc synthétique selon l'invention et révélant la présence de molécules d'eau liées au talc en bordures de feuillets. Ainsi, avantageusement et selon l'invention, une composition de talc synthétique selon l'invention présente, en proche infrarouge, une bande de vibration située entre 5000 $cm^{-1}$ et 5500 $cm^{-1}$, en particulier entre 5200 $cm^{-1}$ et 5280 $cm^{-1}$, correspondant à la présence d'eau liée en bordures de feuillets. La présence d'une telle bande de vibration, présentant une intensité importante, est susceptible de permettre de distinguer un talc synthétique selon l'invention d'un talc naturel, les autres bandes de vibrations en infrarouge d'un talc synthétique selon l'invention et d'un talc naturel étant similaires.

L'invention concerne aussi un procédé de préparation d'une composition comprenant des particules minérales synthétiques et une composition comprenant des particules minérales synthétiques caractérisés en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent aux figures annexées représentant un diffractogramme correspondant à l'analyse en diffraction des rayons X effectuée sur une composition obtenue par un procédé selon l'invention.

A/ - PROTOCOLE GÉNÉRAL DE PRÉPARATION D'UNE COMPOSITION COMPRENANT DES PARTICULES MINÉRALES SYNTHÉTIQUES SELON L'INVENTION

1/ - Préparation d'un hydrogel silico/germano-métallique

L'hydrogel silico/germano-métallique peut être préparé par une réaction de coprécipitation impliquant, à titre de réactif, au moins un composé comprenant du silicium, au moins un sel dicarboxylate de formule $M(R_1\text{-COO})_2$ en présence d'au moins un sel carboxylate de formule $R_2$-COOM' dans laquelle M' désigne un métal choisi dans le groupe formé de Na et K, et $R_2$ est choisi parmi H et les groupements alkyles comprenant moins de 5 atomes de carbone.

Cette réaction de coprécipitation permet d'obtenir un hydrogel silico/germano-métallique hydraté ayant la stoechiométrie du talc (4 Si pour 3 M, M ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; chaque $y(i)$ représentant un nombre réel de l'intervalle [0;1], et tel que $\sum\limits_{i=1}^{8} y(i) = 1$).

L'hydrogel silico/germano-métallique est préparé par une réaction de coprécipitation mise en oeuvre à partir de :

1. une solution aqueuse de métasilicate de sodium penta-hydraté ou une solution aqueuse de métagermanate de sodium, ou un mélange de ces deux solutions dans les proportions molaires $x$:(1-$x$),
2. une solution de sel(s) dicarboxylate(s), préparée avec un ou plusieurs sel(s) dicarboxylate(s) de formule(s) $M(R_1\text{-COO})_2$ dilué(s) dans un acide carboxylique, tel que l'acide acétique, et
3. une solution de sel(s) carboxylate(s), préparée avec un ou plusieurs sel(s) carboxylate(s) de formule(s) $R_2$-COOM' dilué(s) dans de l'eau distillée.

La préparation de cet hydrogel silico/germano-métallique est réalisée en suivant le protocole suivant :

1. on mélange les solutions de métasilicate de sodium et de sel(s) carboxylate(s) de formule(s) $R_2$-COOM',
2. on y ajoute rapidement la solution de sel(s) dicarboxylate(s) de formule(s) $M(R_1\text{-COO})_2$; l'hydrogel de coprécipitation se forme instantanément.

En outre, il est possible de soumettre le milieu de préparation dudit hydrogel aux ultrasons.

A l'issue de cette précipitation on obtient un hydrogel silico/ germano-métallique $(Si_xGe_{1-x})_4M_3O_{11}$, n'$H_2O$ dans une solution aqueuse de sel(s) carboxylate(s) ledit hydrogel étant fortement hydraté et présentant une consistance plus ou moins gélatineuse.

L'hydrogel silico/germano-métallique $(Si_xGe_{1-x})_4M_3O_{11}$, n'$H_2O$ obtenu, en présence du ou des sel(s) carboxylate(s) de formule(s) $R_2$-COOM' et $R_1$-COOM', est ainsi prêt à être directement soumis à un traitement hydrothermal.

L'hydrogel peut également être récupéré après centrifugation (par exemple entre 3000 et 15 000 tours par minute, pendant 5 à 60 minutes) et élimination du surnageant (solution de sel(s) carboxylate(s)), éventuellement lavage à l'eau déminéralisée (par exemples deux lavages et centrifugations successifs) puis séchage, par exemple dans une étuve (60°C, 2 jours), par lyophilisation, par séchage par atomisation ou encore par séchage sous irradiation de micro-ondes. Les particules silico/germano-métalliques de formule $(Si_xGe_{1-x})_4M_3O_{11}$, $n'H_2O$ peuvent ainsi être stockées sous la forme d'une poudre (en présence ou non du ou des sel(s) carboxylate(s) selon qu'un lavage à l'eau a été effectué ou non) en vue d'un éventuel traitement hydrothermal ultérieur.

2/ - Traitement hydrothermal dudit hydrogel silico/germano-métallique

L'hydrogel silico/germano-métallique $(Si_xGe_{1-x})_4M_3O_{11}$, $n'H_2O$ séché ou non, tel que précédemment obtenu, est soumis à un traitement hydrothermal, à une température comprise notamment entre 150°C et 370°C.
Pour ce faire :

1. on place l'hydrogel, tel qu'obtenu après précipitation (le cas échéant, en suspension avec le(s) sel(s) carboxylate(s) de formule(s) $R_2$-COOM' et $R_1$-COOM') ou préalablement séché, dans un réacteur/autoclave ;
2. si besoin, on ajoute sous agitation une solution aqueuse comprenant au moins un sel carboxylate de formule $R_2$-COOM' (sous une forme hydratée ou anhydre) audit hydrogel,
3. on ajuste éventuellement le rapport liquide/solide à une valeur comprise entre 2 et 20, notamment entre 5 et 15 (la quantité de liquide étant exprimée en $cm^3$, et la quantité de solide, en grammes, et désignant la quantité d'hydrogel sec uniquement, c'est-à-dire sans prendre en compte le(s) sel(s) carboxylate(s)),
4. on place le réacteur/autoclave à l'intérieur d'un four ou d'une étuve, à une température de réaction prédéterminée (établie entre 150°C et 350°C), pendant toute la durée du traitement.

Au cours du traitement hydrothermal, l'hydrogel silico/germano-métallique acquiert progressivement une consistance gélatineuse. La composition comprenant des particules minérales obtenue à l'issue du traitement hydrothermal présente une cristallinité observable en diffraction des rayons X, cette cristallinité augmentant avec la durée du traitement hydrothermal et se traduisant sur les diffractogrammes correspondants par l'apparition rapide de raies caractéristiques qui s'affinent et s'intensifient rapidement au cours du traitement.
En outre, par analyse en proche infrarouge, il a été observé que l'intensité de la bande de vibration correspondante à la vibration de la liaison $Mg_3$-OH augmente également avec la durée du traitement hydrothermal.
A l'issue de ce traitement hydrothermal, on obtient une composition talqueuse colloïdale comprenant des particules minérales phyllosilicatées en suspension dans une solution aqueuse de sel(s) carboxylate(s). Au terme de ce traitement hydrothermal, la composition talqueuse contenue dans le réacteur est récupérée par centrifugation (entre 3000 et 15 000 tours par minute, pendant 5 à 60 minutes) puis élimination du surnageant. La solution surnageante contient le/lesdit(s) sel(s) de formule R-COOM' et peut être conservée en vue de récupérer ce/ces sel(s) carboxylate(s) et de le/les recycler.
La composition comprenant des particules minérales récupérée est ensuite, de préférence, lavée avec de l'eau, en particulier avec de l'eau distillée ou osmosée, en effectuant au moins deux cycles de lavage/centrifugation .
La composition comprenant des particules minérales récupérée après la dernière centrifugation peut ensuite être séchée :

- à l'étuve à une température comprise entre 60°C et 130°C, pendant 1 à 24 heures, ou encore,
- par lyophilisation, par exemple dans un lyophilisateur de type CHRIST ALPHA® 1-2 LD Plus, pendant 48 heures à 72 heures,
- ou encore par atomisation.

On obtient au final une composition solide divisée dont la couleur est fonction de la nature du ou des sel(s) dicarboxylate(s) de formule(s) $M(R_1$-COO$)_2$ utilisé(s) pour la préparation de l'hydrogel silico/germano-métallique (et également, le cas échéant, des proportions respectives de ces sel(s) dicarboxylate(s)).
Les inventeurs ont ainsi pu noter que, non seulement, une durée relativement faible de traitement hydrothermal suffit pour permettre une conversion de l'hydrogel initial en un matériau cristallisé et thermiquement stable, mais, également, que les particules minérales synthétiques obtenues présentent une cristallinité améliorée.
Les particules minérales phyllosilicatées contenues dans une composition talqueuse obtenue par un procédé selon l'invention présentent des propriétés remarquables en termes de pureté, de cristallinité et de stabilité thermique, et ce, pour une durée de traitement hydrothermal significativement réduite par rapport à la durée de traitement hydrothermal auparavant nécessaire dans un procédé de préparation de composition talqueuse connu.
En outre, consécutivement au traitement hydrothermal, une composition, en particulier une composition talqueuse, obtenue par un procédé selon l'invention peut éventuellement être soumise à un traitement thermique anhydre, effectué à une pression inférieure à 5 bars (0,5 MPa), à une température supérieure à 350°C et inférieure à la température de dégradation des particules minérales synthétiques, notamment à une température comprise entre 450°C et 600°C, par exemple pendant une durée comprise entre 30 minutes et 24 heures, en particulier entre 1 à 15 heures.

B/ - ANALYSE ET CARACTERISATION STRUCTURELLE

Les résultats d'analyse d'une composition talqueuse obtenue en suivant le protocole précédemment exposé sont ci-après rapportés. Ces résultats confirment que l'invention permet effectivement d'aboutir à la formation de particules minérales phyllosilicatées synthétiques ayant des caractéristiques structurelles (notamment lamellarité et cristallinité) très similaires à celles des talcs naturels. Ils montrent aussi que, notamment par le choix de la température et de la durée de mise en oeuvre, l'invention permet de synthétiser, de façon extrêmement simple, des particules minérales silico/germano-métalliques synthétiques, stables et pures, ayant une taille et des caractéristiques cristallines définies et prévisibles.

Les analyses ont notamment été réalisées par diffraction des rayons X, en infrarouge et par observations en microscopie électronique. Les données recueillies sont présentées à la figure annexée et dans les exemples, et sont ci-après commentées.

1/ - Analyses en diffraction des rayons X

En diffraction des rayons X (RX), un talc naturel tel qu'un talc provenant de la mine d'ARNOLD (Etat de New-York, USA), est connu pour présenter les raies de diffraction caractéristiques suivantes (d'après la publication de Ross M., Smith W.L. et Ashton W.H., 1968, « Triclinic talc and associated amphiboles from Gouverneur mining district, New York ; American Mineralogist », volume 53, pages 751-769) :

-   pour le plan (001), une raie située à une distance de 9,34 Å ;
-   pour le plan (002), une raie située à une distance de 4,68 Å ;
-   pour le plan (020), une raie située à une distance de 4,56 Å ;
-   pour le plan (003), une raie située à une distance de 3,115 Å ;
-   pour le plan (060), une raie située à une distance de 1,52 Å.

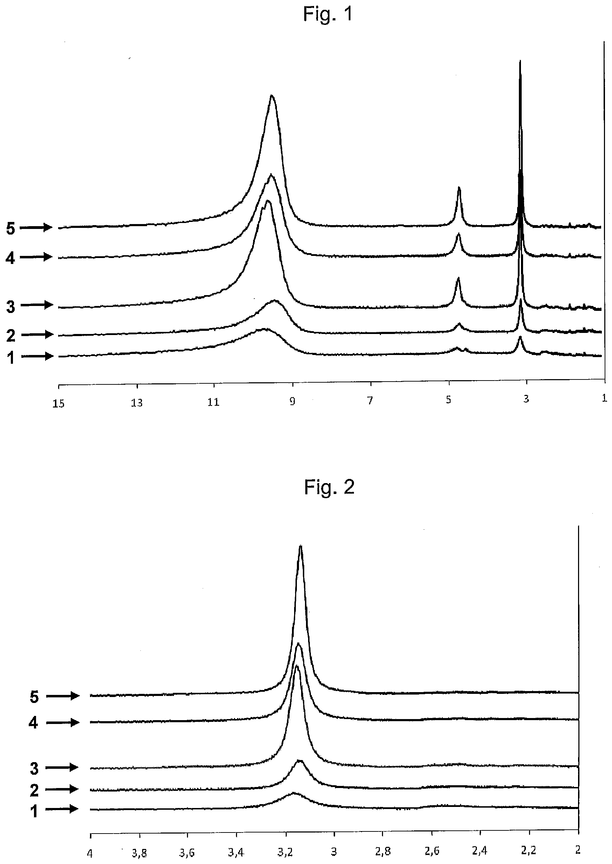

Les figures 1 à 3 présentent des diffractogrammes RX sur chacun desquels est représentée l'intensité relative du signal (nombre de coups par seconde) en fonction de la distance inter-réticulaire en Angstroem.

Les figures 1 et 2 présentent les résultats d'analyses réalisées en diffraction des rayons X sur :

-   une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 3 heures (courbe 1),- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 6 heures (courbe 2),
-   une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 18 heures (courbe 3),
-   une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 24 heures (courbe 4),
-   une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 10 jours (courbe 5).

La figure 2 présente un agrandissement d'une partie des diffractogrammes représentés à la figure 1, c'est-à-dire uniquement la partie des diffractogrammes correspondante aux distances inter-réticulaires comprises entre 2 Å et 4 Å, permettant ainsi une meilleure visualisation des raies correspondantes au plan (003).

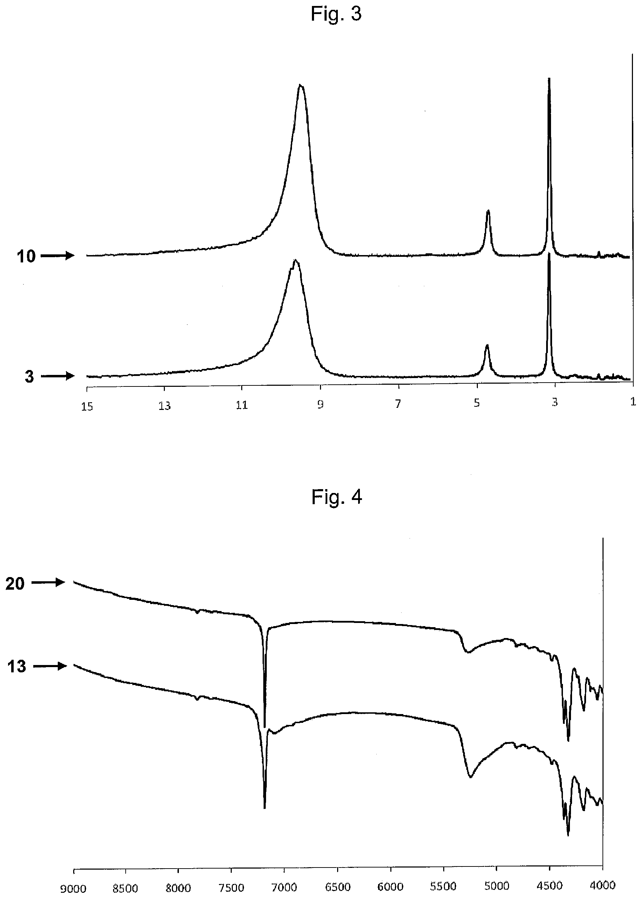

La figure 3 présente les résultats d'analyses réalisées en diffraction des rayons X sur une composition de talc synthétique, de formule $Si_4Mg_3O_{10}(OH)_2$, préparée par un procédé selon l'invention avec précipitation d'un hydrogel silico-métallique en présence d'acétate de sodium et un traitement hydrothermal de 300°C pendant 18 heures (courbe 3) ainsi que sur cette même composition de talc synthétique après un traitement thermique anhydre pendant 5 heures à 550°C (courbe 10).

Les diffractogrammes RX représentés en figures 1 à 3 ont été enregistrés sur un appareil CPS 120 commercialisé par la société INEL (Artenay, France). Il s'agit d'un diffractomètre à détecteur courbe permettant une détection en temps réel sur un domaine angulaire de 120°. La tension d'accélération utilisée est de 40 kV et l'intensité de 25 mA. La relation de Bragg donnant l'équidistance structurale est : $d_{hkl}=0{,}89449/\sin\theta$ (avec l'utilisation d'une anticathode au cobalt).

Cette analyse par diffraction des rayons X confirme qu'il existe une grande similitude structurelle entre les particules minérales phyllosilicatées des compositions talqueuses préparées conformément à l'invention et les particules de talc naturel.

En particulier, les raies de diffraction qui correspondent respectivement aux plans (003) et (060) ont des positions qui coïncident parfaitement avec celles des raies de diffraction de référence pour le talc naturel.

En outre, l'analyse des diffractogrammes RX des compositions talqueuses préparées permet également de déterminer, pour chaque composition talqueuse, leur « domaine cohérent », c'est-à-dire le nombre de feuillets élémentaires empilés sans défaut majeur dans la direction c*. (de l'espace réciproque du réseau cristallin des particules minérales synthétiques). Le domaine cohérent peut être déterminé pour les raies (00$\ell$) et dépend notamment de la largeur à mi-hauteur de la raie correspondante et de l'angle de diffraction correspondant. Dans le cas du talc synthétique, on le détermine en particulier à partir de la raie (003).

Un talc naturel provenant de la province de LYAONING (Chine) présente par exemple un domaine cohérent de 70 feuillets.

Les compositions talqueuses préparées par un procédé selon l'invention présentent des domaines cohérents similaires aux domaines cohérents des talcs naturels et supérieurs aux domaines cohérents de talcs synthétiques de l'état de la technique pour des températures et des durées de traitement hydrothermal comparables.

L'analyse des diffractogrammes RX des compositions talqueuses préparées permet également de déterminer le rapport entre l'intensité de la raie de diffraction caractéristique du plan (001) et l'intensité de la raie de diffraction caractéristique du plan (003) et de le comparer à celui d'un talc naturel. Pour un talc naturel provenant de la province de LYAONING (Chine) le rapport entre l'intensité de la raie de diffraction caractéristique du plan (001) et l'intensité de la raie de diffraction caractéristique du plan (003) est de 0,61.

2/ - Analyses en proche infrarouge

En infrarouge, il est connu que le talc naturel présente, en proche infrarouge, une bande de vibration à 7185 $cm^{-1}$ représentative de la vibration de la liaison $Mg_3$-OH.

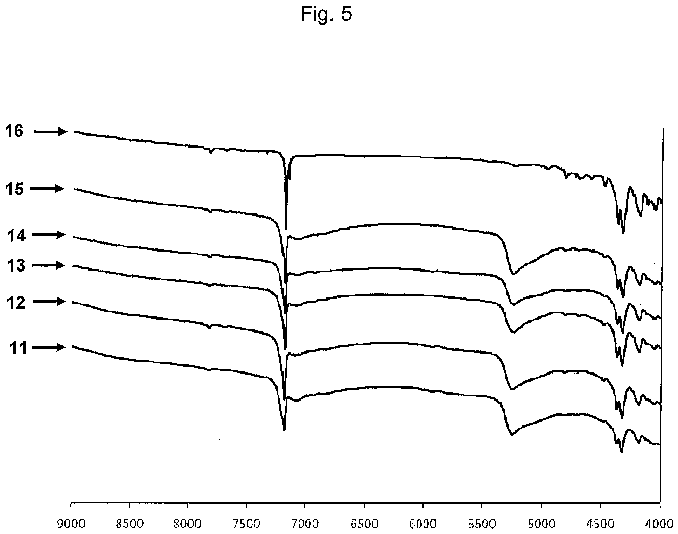

Les figures 4 et 5 présentent des spectres en proche infrarouge sur chacun desquels est représentée l'intensité du signal en fonction de la longueur d'onde exprimée en $cm^{-1}$. La figure 5 représente les spectres en proche infrarouge de :

- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 3 heures (courbe 11),
- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 6 heures (courbe 12),
- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 18 heures (courbe 13),
- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 24 heures (courbe 14),
- une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 10 jours (courbe 15), et une composition de talc naturel provenant de la province de LYAONING (Chine) (courbe 16).

La figure 4 représente un spectre en proche infrarouge d'une composition de talc synthétique $Si_4Mg_3O_{10}(OH)_2$, préparée par un procédé selon l'invention avec précipitation d'un hydrogel silico-métallique en présence d'acétate de sodium et un traitement hydrothermal dudit hydrogel à une température de 300°C pendant 18 heures (courbe 13), ainsi qu'un spectre en proche infrarouge de cette même composition de talc synthétique après un traitement thermique anhydre pendant 5 heures à 550°C (courbe 20).

L'acquisition de ces spectres a été réalisée avec un spectromètre NICOLET 6700-FTIR sur un domaine de 9000 $cm^{-1}$ à 4000 $cm^{-1}$.

3/ - Observations microscopiques et appréciation de la granulométrie des particules

Compte tenu de la grande finesse des poudres que peuvent constituer les compositions talqueuses conformes à l'invention, la taille et la distribution granulométrique des particules minérales phyllosilicatées qui les composent ont été appréciées par observation en microscopie électronique à balayage et à effet de champ et en microscopie électronique en transmission.

On constate que la granulométrie des particules élémentaires varie entre 20 nm et 100 nm.

En outre, il a été observé que les particules de talc synthétiques préparées par un procédé selon l'invention présentent un effet nacré susceptible de présenter un intérêt dans de nombreux domaines industriels.

Les exemples qui suivent illustrent le procédé de préparation selon l'invention et les caractéristiques structurales des compositions comprenant des particules minérales synthétiques, et en particulier des compositions talqueuses comprenant des particules minérales phyllosilicatées, ainsi obtenues.

EXEMPLE 1 - Préparation d'une composition comprenant des particules minérales synthétiques selon l'invention

On prépare une première solution aqueuse de métasilicate de sodium comprenant 42,43g de métasilicate de sodium pentahydraté $Na_2SiO_3,5H_2O$ et 140mL d'eau déminéralisée et on maintient cette solution sous agitation à température ambiante (21°C) pendant 10 minutes. On ajoute alors 171g d'acétate de sodium trihydratée $CH_3$-COO-Na.$3H_2O$ dans la solution, tout en la maintenant sous agitation pendant 10 minutes et à une température comprise entre 30°C et 50°C à l'aide d'un bain-marie. La concentration en acétate de sodium dans cette première solution est de 4 mol/L.

On prépare ensuite une deuxième solution d'acétate de magnésium comprenant 32,17g d'acétate de magnésium tétrahydraté $Mg(CH_3$-$COO)_2.4H_2O$ et 100mL d'acide acétique concentré à 1M.

Enfin, lorsque la première solution de métasilicate de sodium et d'acétate de sodium est revenue à la température ambiante, on ajoute rapidement sous agitation et en une seule fois la deuxième solution dans la première solution.

On obtient une suspension d'hydrogel précurseur de particules de talc synthétique, se présentant sous la forme d'un hydrogel de consistance laiteuse. En fin de précipitation de l'hydrogel, la concentration en acétate de sodium dans la suspension d'hydrogel est de 4 mol/L, ainsi que pendant le traitement hydrothermal subséquent, l'hydrogel obtenu étant ensuite directement soumis à un traitement hydrothermal.

Le traitement hydrothermal de l'hydrogel est effectué à une température de 300°C pendant 3 heures à une pression de 80 bars (8 MPa) (pression de vapeur saturante de l'eau dans le réacteur).

Pour ce faire, on place la suspension d'hydrogel ainsi obtenue directement dans un réacteur en titane clos. Le réacteur en titane est alors disposé dans un four à la température de 300°C pendant 3 heures.

Après refroidissement jusqu'à la température ambiante, le réacteur est ouvert et la suspension obtenue est centrifugée. Après centrifugation, on récupère d'une part une composition talqueuse, et d'autre part, une solution surnageante comprenant notamment de l'acétate de sodium, ce dernier pouvant alors être récupéré et éventuellement recyclé.

On soumet ensuite la composition talqueuse récupérée à deux cycles successifs de lavage à l'eau déminéralisée et centrifugation.

La composition talqueuse récupérée après centrifugation est finalement séchée par lyophilisation pendant 72 heures.

Le diffractogramme des rayons X de la composition de talc synthétique, de formule $Si_4Mg_3O_{10}(OH)_2$, ainsi obtenue est représenté sur la figure 1 (courbe 1). Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,77Å (I=100) ;
- un plan (002) situé à une distance de 4,78Å (I=33);
- un plan (020) situé à une distance de 4,55Å (I=26);
- un plan (003) situé à une distance de 3,17Å (I=61);
- un plan (060) situé à une distance de 1,52Å (I=11).

Un telle composition talqueuse présente un domaine cohérent de 12 feuillets (en utilisant la raie (003)). Le rapport entre l'intensité de la raie de diffraction caractéristique du plan (001) et l'intensité de la raie de diffraction caractéristique du plan (003) est de 1,49.

Le spectre en proche infrarouge de la composition de talc synthétique obtenue est représenté sur la figure 5 (courbe 11). Il présente une bande de vibration à 7185 cm$^{-1}$ représentative de la vibration de la liaison $Mg_3$-OH du talc. Le spectre en proche infrarouge présente également une bande de vibration, à 5251 cm$^{-1}$, caractéristique d'un talc synthétique selon l'invention et correspondant à la présence d'eau liée au talc en bordures de feuillets.

EXEMPLE 2 - Préparation d'une composition comprenant des particules minérales synthétiques selon l'invention

On prépare un hydrogel précurseur de particules minérales synthétiques selon le protocole décrit en exemple 1.

On soumet l'hydrogel obtenu directement à un traitement hydrothermal à une température de 300°C pendant 6 heures à une pression de 80 bars (8 MPa) (pression de vapeur saturante de l'eau dans le réacteur). La concentration en acétate de sodium pendant le traitement hydrothermal est de 4 mol/L.

La composition talqueuse récupérée est ensuite soumise à deux cycles successifs de lavage à l'eau déminéralisée et centrifugation et est finalement séchée par lyophilisation pendant 72 heures.

Le diffractogramme des rayons X de la composition de talc synthétique, de formule $Si_4Mg_3O_{10}(OH)_2$, ainsi obtenue est représenté sur la figure 1 (courbe 2).

Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,45 Å (I=100) ;
- un plan (002) situé à une distance de 4,72 Å (I=34);
- un plan (020) situé à une distance de 4,57 Å (I=20);
- un plan (003) situé à une distance de 3,14 Å (I=98);
- un plan (060) situé à une distance de 1,53 Å (I=18).

Un telle composition talqueuse présente un domaine cohérent de 19 feuillets (en utilisant la raie (003)). Le rapport entre l'intensité de la raie de diffraction caractéristique du plan (001) et l'intensité de la raie de diffraction caractéristique du plan (003) est de 1,06.

Le spectre en proche infrarouge de la composition de talc synthétique obtenue est représenté sur la figure 5 (courbe 12). Il présente une bande de vibration à 7185 cm$^{-1}$ représentative de la vibration de la liaison $Mg_3$-OH du talc. Le spectre en proche infrarouge présente également une bande de vibration, à 5251 cm$^{-1}$, caractéristique d'un talc synthétique selon l'invention et correspondant à la présence d'eau liée au talc en bordures de feuillets.

EXEMPLE 3 - Préparation d'une composition comprenant des particules minérales synthétiques selon l'invention

On prépare un hydrogel précurseur de particules minérales synthétiques selon le protocole décrit en exemple 1.

On soumet l'hydrogel obtenu directement à un traitement hydrothermal à une température de 300°C pendant 18 heures à une pression de 80 bars (8 MPa) (pression de vapeur saturante de l'eau dans le réacteur). La concentration en acétate de sodium pendant le traitement hydrothermal est de 4 mol/L.

La composition talqueuse récupérée est ensuite soumise à deux cycles successifs de lavage à l'eau déminéralisée et centrifugation et est finalement séchée par lyophilisation pendant 72 heures.

Le diffractogramme des rayons X de la composition de talc synthétique, de formule $Si_4Mg_3O_{10}(OH)_2$, ainsi obtenue est représenté sur la figure 1 (courbe 3).

Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,64 Å (I=100) ;
- un plan (002) situé à une distance de 4,74 Å (I=30) ;
- un plan (020) situé à une distance de 4,59 Å (léger épaulement) ;
- un plan (003) situé à une distance de 3,15 Å (I=100) ;
- un plan (060) situé à une distance de 1,52 Å (I=5).

L'intensité I des raies correspondantes donnée est normalisée par rapport à la raie la plus intense du diffractogramme, l'intensité de la raie la plus intense étant considérée comme égale à 100. On observe qu'une telle composition préparée par un procédé selon l'invention présente, en diffraction des rayons X, des raies correspondantes aux plans (001) et (003) d'intensités très importantes par rapport aux autres raies, révélatrices d'une cristallinité très proche de celle d'un talc naturel. En outre, la raie correspondante au plan (002) présente une intensité plus importante que la raie correspondante au plan (020), la raie de diffraction caractéristique d'un plan (020) étant en partie confondue avec la raie de diffraction caractéristique d'un plan (002) et n'étant présente que sous la forme d'un léger épaulement.

Une telle composition talqueuse présente un domaine cohérent de 25 feuillets (en utilisant la raie (003)). Le rapport entre l'intensité de la raie de diffraction caractéristique du plan (001) et l'intensité de la raie de diffraction caractéristique du plan (003) est de 0,96. Le spectre en proche infrarouge de la composition de talc synthétique obtenue est représenté sur les figures 4 et 5 (courbe 13). Il présente une bande de vibration à 7185 cm$^{-1}$ représentative de la vibration de la liaison $Mg_3$-OH du talc. Le spectre en proche infrarouge présente également une bande de vibration, à 5251 cm$^{-1}$,

caractéristique d'un talc synthétique selon l'invention et correspondant à la présence d'eau liée au talc en bordures de feuillets.

EXEMPLE 4 - Préparation d'une composition comprenant des particules minérales synthétiques selon l'invention

On soumet le talc obtenu à l'exemple 3 à un traitement thermique anhydre ou « recuit » pendant 5 heures à 550°C.

La composition de talc synthétique, de formule $Si_4Mg_3O_{10}(OH)_2$, ainsi obtenue après recuit a été caractérisée par diffraction des rayons X et analyse en proche infrarouge.

Le diffractogramme des rayons X de la composition de talc synthétique, de formule $Si_4Mg_3O_{10}(OH)_2$, ainsi obtenue est représenté sur la figure 3 (courbe 10).

Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,51 Å (I=98) ;
- un plan (002) situé à une distance de 4,70 Å (I=29) ;
- un plan (003) situé à une distance de 3,14 Å (I=100) ;
- un plan (060) situé à une distance de 1,52 Å (I=5).

L'intensité I des raies correspondantes donnée est normalisée par rapport à la raie la plus intense du diffractogramme, l'intensité de la raie la plus intense étant considérée comme égale à 100.

Par rapport au diffractogramme des rayons X du talc synthétique avant recuit, on observe une augmentation de l'intensité de la raie (002) par rapport à l'intensité de la raie (020), la raie (020) étant alors confondue avec la raie de diffraction caractéristique du plan (002). On observe également une augmentation des intensités des raies (001), (002) et (003), c'est-à-dire, plus généralement, des intensités des raies (00ℓ). Un tel recuit permet donc d'augmenter encore la cristallinité du talc synthétique préparé, les caractéristiques structurelles de celui-ci se rapprochant alors encore plus de celles d'un talc naturel.

Une telle composition talqueuse présente, après recuit, un domaine cohérent de 28 feuillets (en utilisant la raie (003). Le rapport entre l'intensité de la raie de diffraction caractéristique du plan (001) et l'intensité de la raie de diffraction caractéristique du plan (003) est de 0,98.

Le spectre en proche infrarouge de la composition de talc synthétique obtenue est représenté sur la figure 4 (courbe 20). Le spectre en proche infrarouge de la composition de talc synthétique obtenue après recuit présente une bande de vibration à 7185 cm$^{-1}$ représentative de la vibration de la liaison $Mg_3$-OH du talc. L'intensité de cette bande de vibration a augmenté par rapport au spectre en proche infrarouge du talc synthétique avant recuit, ce qui démontre une augmentation de la cristallinité du talc synthétique obtenu. On observe également une diminution de l'intensité de la bande de vibration correspondant à la présence d'eau liée au talc en bordures de feuillets (située à 5273 cm$^{-1}$) par rapport à la courbe 13 du talc synthétique avant traitement thermique, révélant une diminution du nombre de molécules d'eau liée au talc en bordures de feuillets au cours du recuit.

EXEMPLE 5 - Préparation d'une composition comprenant des particules minérales synthétiques selon l'invention

On prépare un hydrogel précurseur de particules minérales synthétiques selon le protocole décrit en exemple 1.

On soumet l'hydrogel obtenu directement à un traitement hydrothermal à une température de 300°C pendant 24 heures à une pression de 80 bars (8 MPa) (pression de vapeur saturante de l'eau dans le réacteur). La concentration en acétate de sodium pendant le traitement hydrothermal est de 4 mol/L.

La composition talqueuse récupérée est ensuite soumise à deux cycles successifs de lavage à l'eau déminéralisée et centrifugation et est finalement séchée par lyophilisation pendant 72 heures.

Le diffractogramme des rayons X de la composition de talc synthétique, de formule $Si_4Mg_3O_{10}(OH)_2$, ainsi obtenue est représenté sur la figure 1 (courbe 4).

Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,54 Å (I=100) ;
- un plan (002) situé à une distance de 4,73 Å (I=31);
- un plan (003) situé à une distance de 3,15 Å (I=96);
- un plan (060) situé à une distance de 1,52 Å (I=7).

On observe que la raie correspondante au plan (002) présente une intensité plus importante que la raie correspondante au plan (020), la raie de diffraction caractéristique d'un plan (020) étant en partie confondue avec la raie de diffraction caractéristique d'un plan (002) et n'étant présente que sous la forme d'un très léger épaulement.

Un telle composition talqueuse présente un domaine cohérent de 24 feuillets (en utilisant la raie (003). Le rapport entre l'intensité de la raie de diffraction caractéristique du plan (001) et l'intensité de la raie de diffraction caractéristique du plan (003) est de 0,96.

Le spectre en proche infrarouge de la composition de talc synthétique obtenue est représenté sur les figures 4 et 5 (courbe 14). Il présente une bande de vibration à 7185 cm$^{-1}$ représentative de la vibration de la liaison $Mg_3$-OH du talc. Le spectre en proche infrarouge présente également une bande de vibration, à 5251 cm$^{-1}$, caractéristique d'un talc synthétique selon l'invention et correspondant à la présence d'eau liée au talc en bordures de feuillets.

EXEMPLE 6 - Préparation d'une composition comprenant des particules minérales synthétiques selon l'invention

On prépare un hydrogel précurseur de particules minérales synthétiques selon le protocole décrit en exemple 1.

On soumet l'hydrogel obtenu directement à un traitement hydrothermal à une température de 300°C pendant 10 jours à une pression de 80 bars (8 MPa) (pression de vapeur saturante de l'eau dans le réacteur). La concentration en acétate de sodium pendant le traitement hydrothermal est de 4 mol/L.

La composition talqueuse récupérée est ensuite soumise à deux cycles successifs de lavage à l'eau déminéralisée et centrifugation, et est finalement séchée par lyophilisation pendant 72 heures.

La composition talqueuse récupérée est ensuite soumise à deux cycles successifs de lavage à l'eau déminéralisée et centrifugation et est finalement séchée par lyophilisation pendant 72 heures.

Le diffractogramme des rayons X de la composition de talc synthétique, de formule $Si_4Mg_3O_{10}(OH)_2$, ainsi obtenue est représenté sur la figure 1 (courbe 5).

Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 9,51 Å (I=92) ;
- un plan (002) situé à une distance de 4,73 Å (I=26);
- un plan (003) situé à une distance de 3,14 A (I =100);
- un plan (060) situé à une distance de 1,52 Å (I=5).

On observe que la raie correspondante au plan (002) présente une intensité plus importante que la raie correspondante au plan (020), la raie de diffraction caractéristique d'un plan (020) étant confondue avec la raie de diffraction caractéristique d'un plan (002) et difficile à distinguer de celle-ci.

Une telle composition talqueuse présente un domaine cohérent de 34 feuillets (en utilisant la raie (003). Le rapport entre l'intensité de la raie de diffraction caractéristique du plan (001) et l'intensité de la raie de diffraction caractéristique du plan (003) est de 0,81.

Le spectre en proche infrarouge de la composition de talc synthétique obtenue est représenté sur la figure 5 (courbe 15). Il présente une bande de vibration à 7185 cm$^{-1}$ représentative de la vibration de la liaison $Mg_3$-OH du talc. Le spectre en proche infrarouge présente également une bande de vibration, à 5251 cm$^{-1}$, caractéristique d'un talc synthétique selon l'invention et correspondant à la présence d'eau liée au talc en bordures de feuillets.

On remarque ainsi que plus la durée du traitement hydrothermale augmente (de même qu'avec un traitement thermique anhydre), plus la composition de talc synthétique obtenue se rapproche d'un talc naturel, en particulier au regard des valeurs de domaines cohérents et du rapport entre l'intensité de la raie de diffraction RX caractéristique du plan (001) et l'intensité de la raie de diffraction RX caractéristique du plan (003) (pour un même hydrogel précurseur et une température de traitement hydrothermale constante).

On peut ainsi noter que les spectres en proche infrarouge des différents talcs synthétiques selon l'invention sont très proches d'un spectre en proche infrarouge d'un talc naturel (courbe 16, figure 5) à l'exception de la bande de vibration entre 5000 cm$^{-1}$ et 5500 cm$^{-1}$ qui, pour un talc naturel, n'est pas d'une intensité aussi importante que pour des talcs synthétiques selon l'invention.

## Revendications

1. Procédé de préparation d'une composition comprenant des particules minérales synthétiques silicatées, dans lequel on prépare un hydrogel précurseur desdites particules minérales synthétiques silicatées, par une réaction de coprécipitation entre :

   - au moins un composé comprenant du silicium choisi dans le groupe formé des silicates de sodium et des silices, et
- au moins un composé comprenant au moins un élément métallique M,

**caractérisé en ce que** ladite réaction de co-précipitation a lieu en présence d'au moins un sel carboxylate de formule $R_2$-COOM' dans laquelle :

- M' désigne un métal choisi dans le groupe formé de Na et K, et
- $R_2$ est choisi parmi H et les groupements alkyles comprenant moins de 5 atomes de carbone,

le(s) sel(s) carboxylate(s) de formule $R_2$-COOM' étant présent(s) de façon à présenter, par rapport au silicium, un rapport molaire $R_2$-COOM'/Si compris entre 0,1 et 9,
et **en ce que**
ledit composé comprenant au moins un élément métallique M est
un sel dicarboxylate de formule $M(R_1$-COO$)_2$ dans laquelle :

- $R_1$ est choisi parmi H et les groupements alkyles comprenant moins de 5 atomes de carbone et,
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$;

chaque $y(i)$ représentant un nombre réel de l'intervalle [0 ;1], et tel que $\sum y(i) = 1$.

2. Procédé selon la revendication 1, **caractérisé en ce qu'**on soumet ensuite ledit hydrogel à un traitement hydrothermal, pour obtenir lesdites particules minérales synthétiques.

3. Procédé selon l'une des revendications 1 ou 2, **caractérisé en ce qu'**on soumet directement le milieu de co-précipitation dudit hydrogel précurseur à un traitement hydrothermal.

4. Procédé selon l'une des revendications 1 à 3, **caractérisé en ce que** les groupements $R_1$ et $R_2$ sont choisis dans le groupe formé de $CH_3$-, $CH_3$-$CH_2$- et $CH_3$-$CH_2$-$CH_2$-.

5. Procédé selon l'une des revendications 1 à 4, **caractérisé en ce que** les groupements $R_1$ et $R_2$ sont identiques.

6. Procédé selon l'une des revendications 1 à 5, **caractérisé en ce qu'**on utilise du métasilicate de sodium à titre de composé comprenant du silicium.

7. Procédé selon l'une des revendications 1 à 6, **caractérisé en ce que** lesdites particules minérales synthétiques sont des particules minérales silicatées, en particulier des particules minérales phyllosilicatées.

8. Procédé selon l'une des revendications 1 à 7, **caractérisé en ce que** ledit hydrogel précurseur desdites particules minérales synthétiques est un hydrogel silico/germano-métallique de formule $(Si_xGe_{1-x})_4M_3O_{11}$, n'$H_2O$:

- x étant un nombre réel de l'intervalle [0 ;1],
- n' étant relatif à un nombre de molécule(s) d'eau associée(s) audit hydrogel silico/germano-métallique.

9. Procédé selon l'une des revendications 2 à 8, **caractérisé en ce qu'**on réalise ledit traitement hydrothermal à une température comprise entre 150°C et 400°C.

10. Procédé selon l'une des revendications 2 à 9, **caractérisé en ce qu'**on réalise ledit traitement hydrothermal à une pression comprise entre 5 bars et 200 bars.

11. Composition comprenant des particules minérales synthétiques silicatées obtenue par un procédé selon l'une des revendications 1 à 10, **caractérisée en ce qu'**elle présente, en diffraction des rayons X, des raies de diffraction caractéristiques suivants :

- un plan (001) situé à une distance comprise entre 9,40 Å et 9,90 Å ;
- un plan (002) situé à une distance comprise entre 4,60 Å et 4,80 Å ;
- un plan (003) situé à une distance comprise entre 3,10 Å et 3,20 Å ;
- un plan (060) situé à une distance comprise entre 1,51 Å et 1,53 Å, l'intensité de la raie de diffraction caractéristique d'un plan (002) étant supérieure à l'intensité du signal correspondant à un plan (020) situé à une distance comprise entre 4,40 Å et 4,60 Å, et, le rapport entre l'intensité de la raie de diffraction caractéristique d'un plan (001) et l'intensité de la raie de diffraction caractéristique d'un plan (003) étant compris entre 0,60 et 1,50.

12. Composition selon la revendication 11, **caractérisée en ce que** lesdites particules minérales synthétiques sont des particules minérales phyllosilicatées présentant au moins une phase non gonflante formée d'un empilement de feuillets élémentaires de type phyllosilicate 2/1 et de formule chimique $(Si_xGe_{1-x})_4M_3O_{10}(OH)_2$, dans laquelle :

   - x est un nombre réel de l'intervalle [0 ;1], et
   - M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$;

   chaque $y(i)$ représente un nombre réel de l'intervalle [0 ;1], et tel que $\sum_{i=1}^{8} y(i) = 1$.

13. Composition selon l'une des revendications 11 ou 12, **caractérisée en ce qu'**elle présente, en proche infrarouge, une bande de vibration située entre 5000 $cm^{-1}$ et 5500 $cm^{-1}$, correspondant à la présence d'eau liée en bordures de feuillets.

## Patentansprüche

1. Verfahren zur Herstellung einer Zusammensetzung mit silizierten synthetischen Mineralpartikeln, wobei ein Vorläuferhydrogel der silizierten synthetischen Mineralpartikel durch eine Mitfällungsreaktion hergestellt wird zwischen:

   - mindestens einer Verbindung mit Silicium, ausgewählt aus der Gruppe, gebildet aus Natriumsilicaten und Siliciumdioxiden, und
   - mindestens einer Verbindung mit mindestens einem metallischem Element M, **dadurch gekennzeichnet, dass** die Mitfällungsreaktion in Anwesenheit von mindestens einem Carboxylatsalz der Formel $R_2$-COOM' stattfindet, wobei:
   - M' ein Metall bezeichnet, ausgewählt aus der Gruppe, gebildet aus Na und K, und
   - $R_2$ ausgewählt ist aus H und den Alkylgruppierungen mit mindestens 5 Kohlenstoffatomen,

   wobei das/die Carboxylatsalz(e) der Formel $R_2$-COOM' anwesend ist/sind, um im Verhältnis zum Silicium ein Molverhältnis $R_2$-COOM'/Si im Bereich zwischen 0,1 und 9 darzustellen,
   und dadurch, dass:
   die Verbindung mit mindestens einem metallischen Element M ein Dicarboxylatsalz der Formel $M(R_1$-COO$)_2$ ist, wobei:

   - $R_1$ ausgewählt ist aus H und den Alkylgruppierungen mit mindestens 5 Kohlenstoffatomen, und
   - M mindestens ein divalentes Metall bezeichnet, aufweisend als Formel $Mg_{y(1)}CO_{y(2)}Zn_{y(3)}Cu_{y(4)}Mn_{y(5)}Fe_{y(6)}Ni_{y(7)}Cr_{y(8)}$; wobei jedes $y(i)$ eine reelle Zahl de Intervalls [0; 1] darstellt, und wie $\sum y(i) = 1$.

2. Verfahren nach Anspruch 1, **dadurch gekennzeichnet, dass** das Hydrogel anschließend einer hydrothermischen Behandlung unterzogen wird, um die synthetischen Mineralpartikel zu erhalten.

3. Verfahren nach einem der Ansprüche 1 oder 2, **dadurch gekennzeichnet, dass** des Mitausfällungsmedium des Vorläuferhydrogels direkt einer hydrothermischen Behandlung unterzogen wird.

4. Verfahren nach einem der Ansprüche 1 bis 3, **dadurch gekennzeichnet, dass** die Gruppierungen $R_1$ und $R_2$ ausgewählt sind aus der Gruppe, gebildet aus $CH_3$-, $CH_3$-$CH_2$- und $CH_3$-$CH_2$-$CH_2$-.

5. Verfahren nach einem der Ansprüche 1 bis 4, **dadurch gekennzeichnet, dass** die Gruppierungen $R_1$ und $R_2$ identisch sind.

6. Verfahren nach einem der Ansprüche 1 bis 5, **dadurch gekennzeichnet, dass** Natriummetasilikat als Verbindung mit Silicium verwendet wird.

7. Verfahren nach einem der Ansprüche 1 bis 6, **dadurch gekennzeichnet, dass** die synthetischen Mineralpartikel silizierte Mineralpartikel sind, insbesondere phyllosilizierte Mineralpartikel.

8. Verfahren nach einem der Ansprüche 1 bis 7, **dadurch gekennzeichnet, dass** das Vorläuferhydrogel der synthetischen Mineralpartikel ein Silicium-/Germaniummetallisches Hydrogel der Formel $(Si_xGe_{i-x})_4M_3O_{11}$, $n'H_2O$ ist:

- wobei x eine reelle Zahl des Intervalls [0; 1] ist,
- wobei n' relativ einer Anzahl von Wassermolekülen ist, assoziiert mit dem Silicium-/Germanium-metallischen Hydrogel.

9. Verfahren nach einem der Ansprüche 2 bis 8, **dadurch gekennzeichnet, dass** die hydrothermische Behandlung bei einer Temperatur im Bereich zwischen 150 °C und 400 °C durchgeführt wird.

10. Verfahren nach einem der Ansprüche 2 bis 9, **dadurch gekennzeichnet, dass** die hydrothermische Behandlung bei einem Druck im Bereich zwischen 5 Bar und 200 Bar durchgeführt wird.

11. Zusammensetzung mit silizierten synthetischen Mineralpartikeln, erhalten durch ein Verfahren nach einem der Ansprüche 1 bis 10, **dadurch gekennzeichnet, dass** es, in Diffraktion der Röntgenstrahlen, folgende charakteristische Diffraktionsstreifen darstellt:

- eine Ebene (001), die sich in einem Abstand im Bereich zwischen 9,40 Ä und 9,90 Ä befindet;
- eine Ebene (002), die sich in einem Abstand im Bereich zwischen 4,60 Ä und 4,80 Ä befindet;
- eine Ebene (003), die sich in einem Abstand im Bereich zwischen 3,10 Ä und 3,20 Ä befindet;
- eine Ebene (060), die sich in einem Abstand im Bereich zwischen 1,51 Ä und 1,53 Ä befindet,

wobei die Intensität des Diffraktionsstreifens, die charakteristisch für eine Ebene (002) ist, größer als die Intensität des Signals ist, das einer Ebene (020) entspricht, die sich in einem Abstand im Bereich zwischen 4,40 Å und 4,60 Å befindet, und das Verhältnis zwischen der Intensität des Diffraktionsstreifens, die charakteristisch für eine Ebene (001) ist, und der Intensität des Diffraktionsstreifens, die charakteristisch für eine Ebene (003) ist, im Bereich zwischen 0,60 und und 1,50 liegt.

12. Zusammensetzung nach Anspruch 11, **dadurch gekennzeichnet, dass** die synthetischen Mineralpartikel phyllosilizierte Mineralpartikel sind, die mindestens eine nicht quellende Phase darstellten, gebildet aus einer Stapelung von elementaren Blättchen vom Typ Phyllosilicat 2/1 und der chemischen Formel $(Si_xGe_{1-x})_4M_3O_{10}(OH)_2$, wobei:

- x eine reelle Zahl des Intervalls [0;1] ist, und
- M mindestens ein divalentes Metall bezeichnet, aufweisend als Formel $Mg_{y(1)}CO_{y(2)}Zn_{y(3)}Cu_{y(4)}Mn_{y(5)}Fe_{y(6)}Ni_{y(7)}Cr_{y(8)}$; wobei jedes $y(i)$ eine reelle Zahl des Intervalls [0; 1] darstellt, und wie $\sum_{i=1}^{8} y(i) = 1$.

13. Zusammensetzung nach einem beliebigen der Ansprüche 11 oder 12, **dadurch gekennzeichnet, dass** sie im Nahinfrarot ein Vibrationsband darstellt, das sich zwischen 5000 cm$^{-1}$ und 5500 cm$^{-1}$ befindet, entsprechend der Anwesenheit von gebundenem Wasser der Blättchen.

**Claims**

1. Process for the preparation of a composition comprising synthetic silicate mineral particles, wherein a hydrogel precursor of said synthetic silicate mineral particles is prepared by a coprecipitation reaction between

- at least one compound comprising silicium chosen in the group consisting of sodium silicate and silica, and
- at least one compound comprising at least one metal element M,

wherein the coprecipitation reaction takes place in the presence of at least one carboxylate salt of the formula $R_2$-COOM', wherein

M' is a metal chosen in the group consisting of Na and K, and
$R_2$ is H or an alkyl group having less than 5 carbon atoms,

wherein said carboxylate salt(s) of the formula $R_2$-COOM' being present in a way to represent, with respect to silicium, a molar ratio $R_2$-COOM'/Si comprised between 0.1 and 9, and in that the said compound comprising at least one metal element is a dicarboxylate salt of formula $M(R_1$-COO$)_2$ in which:

- $R_1$ is chosen among H and the alkyl groups comprising less than 5 carbon atoms and
- M denotes at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$, each

$y(i)$ representing a real number of the interval [0; 1], such that $\sum_{i=1}^{8} y(i) = 1$.

2. Process according to claim 1, further subjecting said hydrogel precursor to a hydrothermal treatment to obtain said synthetic mineral particles.

3. Process according to claim 1 or 2, wherein directly subjecting the coprecipitation medium of said hydrogel precursor to a hydrothermal treatment.

4. Process according to anyone of claims 1 to 3, wherein $R_1$ and $R_2$ are chosen in the group consisting of $CH_3$-, $CH_3$-$CH_2$- and $CH_3$-$CH_2$-$CH_2$-.

5. Process according to one of claims 1 to 4, wherein $R_1$ and $R_2$ are identical.

6. Process according to one of claims 1 to 5, wherein sodium metasilicate is used as compound comprising silicium.

7. Process according to one of claims 1 to 6, wherein said synthetic mineral particles are silicate mineral particles, in particular phyllosilicate mineral particles.

8. Process according to one of claims 1 to 7, wherein said hydrogel precursor of said synthetic mineral particles is a silico/germano metallic hydrogel of the formula

$$(Si_xGe_{1-x})_4M_3O_{11}, n'H_2O,$$

wherein

x is a real number of the interval [0; 1], and
n' is a number of molecule(s) of water associated with said silico/germano metallic hydrogel.

9. Process according to one of claims 2 to 8, wherein said hydrothermal treatment is carried out at a temperature of from 150°C to 400°C.

10. Process according to one of claims 2 to 9, wherein said hydrothermal treatment is carried out at a pressure of from 5 bar to 200 bar.

11. Composition comprising synthetic silicate mineral particles obtained by the process according to one of claims 1 to 10, wherein the composition has, in X-ray diffraction, the following characteristic diffraction lines:

- a plane (001) situated at a distance between 9.40 Å and 9.90 Å;
- a plane (002) situated at a distance between 4.60 Å and 4.80 Å;
- a plane (003) situated at a distance between 3.10 Å and 3.20 Å; and
- a plane (060) situated at a distance between 1.51 Å and 1.53 Å;

the intensity of the diffraction line characteristic of the plane (002) being greater than the intensity of the signal corresponding to a plane (020) situated at a distance between 4.40 Å and 4.60 Å, and the ratio between the intensity of the diffraction line characteristic of the plane (001) and the intensity of the diffraction line characteristic of the plane (003) being from 0.60 to 1.50.

12. Composition according to claim 11, wherein said synthetic mineral particles are phyllosilicate mineral particles having at least one non-swelling phase formed of a stack of elementary lamellae of the 2:1 phyllosilicate type, and having the chemical formula

$$(Si_xGe_{1-x})_4M_3O_{10}(OH)_2$$

wherein

x is a real number of the interval [0; 1], and
M is at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$, each y(i) representing a real number of the interval [0; 1], such that $\sum_{i=1}^{8} y(i) = 1$ . phyllosilicate mineral particles.

13. Composition according to one of claims 11 or 12, wherein the composition has, in near-infrared, a vibration band situated between 5000 cm$^{-1}$ and 5500 cm$^{-1}$, corresponding to the presence of water bonded at lamina edges.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 2008009799 A

**Littérature non-brevet citée dans la description**

*   **ROSS M. ; SMITH W.L. ; ASHTON W.H.** *Triclinic talc and associated amphiboles from Gouverneur mining district, New York ; American Mineralogist,* 1968, vol. 53, 751-769